# EUROPÄISCHE PATENTANMELDUNG

(11) **EP 3 708 297 A1**
(43) Veröffentlichungstag der Anmeldung: **16.09.2020**
(21) Anmeldenummer: 19162876.7
(22) Anmeldetag: 14.03.2019
(51) Int. Cl.: B23Q 17/12, G05B 19/404

(54) **OPTIMIERTE ANSTEUERUNG EINES AKTIVEN SCHWINGUNGSDÄMPFERS**

(71) Anmelder: Siemens Aktiengesellschaft, 80333 München (DE)
(72) Erfinder: Bretschneider, Jochen, 73732 Esslingen (DE); Ladra, Uwe, 91056 Erlangen (DE); Schäfers, Elmar, 90763 Fürth (DE); Schür, Torsten, 91058 Erlangen (DE)

(57) **Zusammenfassung**

Eine Steuereinrichtung (9) einer Werkzeugmaschine wird durch ein Systemprogramm (10) gesteuert. Dadurch steuert die Steuereinrichtung (9) Achsen (1) an, mittels derer Maschinenelemente (3) der Werkzeugmaschine lagegeregelt relativ zueinander verfahren werden, so dass ein Werkzeug (5) der Werkzeugmaschine relativ zu einem zu bearbeitenden Werkstück (6) positioniert wird. Auch treibt sie eine Spindel (7) der Werkzeugmaschine an, so dass das Werkzeug (5) das Werkstück (6) spanabhebend bearbeitet. Während der spanabhebenden Bearbeitung des Werkstücks (6) durch das Werkzeug (5) nimmt die Steuereinrichtung (9) mindestens eine Messgröße (a) entgegen, die für eine Vibration eines der Maschinenelemente (3) charakteristisch ist. Anhand der mindestens einen Messgröße (a) ermittelt sie mit oder ohne Berücksichtigung eines Erwartungswertes (a') für die mindestens eine Messgröße (a) zur Dämpfung der Vibration dieses Maschinenelements (3) unter Verwendung von Ermittlungsparametern (PAR) eine Steuergröße (C) für einen auf dieses Maschinenelement (3) wirkenden aktiven Schwingungsdämpfer (8) und steuert den aktiven Schwingungsdämpfer (8) entsprechend der ermittelten Steuergröße (C) an. Weiterhin variiert die Steuereinrichtung (9) während der spanabhebenden Bearbeitung des Werkstücks (6) durch das Werkzeug (5) mindestens einen der Ermittlungsparameter (PAR).

## Beschreibung

Die vorliegende Erfindung geht aus von einem Steuerverfahren für eine Werkzeugmaschine, wobei eine Steuereinrichtung der Werkzeugmaschine unter Steuerung durch ein Systemprogramm
- Achsen ansteuert, mittels derer Maschinenelemente der Werkzeugmaschine lagegeregelt relativ zueinander verfahren werden, so dass ein Werkzeug der Werkzeugmaschine relativ zu einem zu bearbeitenden Werkstück positioniert wird,
- mindestens eine Spindel der Werkzeugmaschine antreibt, so dass das Werkzeug das Werkstück spanabhebend bearbeitet,
- während der spanabhebenden Bearbeitung des Werkstücks durch das Werkzeug mindestens eine Messgröße entgegennimmt, die für eine Vibration eines der Maschinenelemente charakteristisch ist,
- anhand der mindestens einen Messgröße mit oder ohne Berücksichtigung eines Erwartungswertes für die mindestens eine Messgröße zur Dämpfung der Vibration dieses Maschinenelements unter Verwendung von Ermittlungsparametern eine Steuergröße für einen auf dieses Maschinenelement wirkenden aktiven Schwingungsdämpfer ermittelt und
- den aktiven Schwingungsdämpfer entsprechend der ermittelten Steuergröße ansteuert.

(Kommentar 1: der Erwartungswert kann beispielsweise eine Sollgeschwindigkeit oder eine Sollbeschleunigung sein)
(Kommentar 2: die Verfahrbarkeit relativ zueinander macht das Wort "Maschinenelement" breit genug, dass auch eine Vibration eines feststehenden Maschinenelements mit umfasst ist)

Die vorliegende Erfindung geht weiterhin aus von einem Systemprogramm für eine Steuereinrichtung einer Werkzeugmaschine, wobei das Systemprogramm Maschinencode umfasst, der von der Steuereinrichtung abarbeitbar ist, wobei die Abarbeitung des Maschinencodes durch die Steuereinrichtung bewirkt, dass die Steuereinrichtung die Werkzeugmaschine gemäß einem derartigen Steuerverfahren steuert.

Die vorliegende Erfindung geht weiterhin aus von einer Steuereinrichtung einer Werkzeugmaschine, wobei die Steuereinrichtung mit einem derartigen Systemprogramm programmiert ist, so dass die Steuereinrichtung im Betrieb ein derartiges Steuerverfahren ausführt.

Die vorliegende Erfindung geht weiterhin aus von einer Werkzeugmaschine,
- wobei die Werkzeugmaschine mehrere Achsen aufweist, mittels derer Maschinenelemente der Werkzeugmaschine lagegeregelt relativ zueinander verfahrbar sind, so dass durch das Verfahren der Maschinenelemente ein Werkzeug der Werkzeugmaschine relativ zu einem zu bearbeitenden Werkstück positioniert wird,
- wobei die Werkzeugmaschine mindestens eine Spindel aufweist, mittels derer das Werkzeug relativ zum Werkstück oder umgekehrt das Werkstück relativ zum Werkzeug rotierbar ist, so dass das Werkzeug das Werkstück spanabhebend bearbeitet,
- wobei die Werkzeugmaschine einen aktiven Schwingungsdämpfer aufweist, mittels dessen eine Vibration eines der Maschinenelemente dämpfbar ist,
- wobei die Werkzeugmaschine eine derartige Steuereinrichtung aufweist.

Bei der spanabhebenden Bearbeitung von Werkstücken in Werkzeugmaschinen können in bestimmten Betriebssituationen Vibrationen von Maschinenelementen auftreten. Diese Vibrationen - üblicherweise als Rattern bezeichnet - sind aus verschiedenen Gründen von Nachteil. Zunächst erzeugen sie ein als unangenehm empfundenes Geräusch. Weiterhin führen die Vibrationen zu einer verringerten Oberflächenqualität des Werkstücks. Auch größerer Verschleiß des Werkzeugs kann die Folge sein. Es kann sogar geschehen, dass das Werkzeug durch die Vibrationen zerstört wird, beispielsweise ein Bohrer oder Fräser abbricht.

Zur Unterdrückung oder Dämpfung derartiger Vibrationen sind passive Schwingungsdämpfer und aktive Schwingungsdämpfer bekannt. Sowohl passive als auch aktive Schwingungsdämpfer dienen jedoch nicht dem eigentlichen Betrieb der Werkzeugmaschine. Sie dienen vielmehr dazu, eine beim Betrieb der Werkzeugmaschine auftretende unerwünschte Nebenwirkung - nämlich die Schwingungen und Vibrationen - zu reduzieren und nach Möglichkeit sogar zu eliminieren.

Passive Schwingungsdämpfer enthalten bewegliche Massen, die über Federelemente und Dämpfungselemente auf das Maschinenelement wirken können, dessen Vibration gedämpft werden soll. Sie enthalten aber keine aktiv angesteuerten Elemente. Nach dem Einbau in die Werkzeugmaschine wird der entsprechende passive Schwingungsdämpfer im Betrieb der Werkzeugmaschine nicht aktiv angesteuert.

Aktive Schwingungsdämpfer enthalten ebenfalls bewegliche Massen, die auf das Maschinenelement wirken können, dessen Vibration gedämpft werden soll. Aktive Schwingungsdämpfer enthalten jedoch aktiv angesteuerte Elemente, über die direkt eine Kraftwirkung auf das entsprechende Maschinenelement ausgeübt werden kann. Im Betrieb der Werkzeugmaschine wird der entsprechende aktive Schwingungsdämpfer auch aktiv angesteuert.

Aus der EP 3 017 911 A1 ist ein derartiger aktiver Schwingungsdämpfer bekannt. Dieser aktive Schwingungsdämpfer ist im Stößel einer Werkzeugmaschine angeordnet, an dessen Ende der Bearbeitungskopf der Werkzeugmaschine angeordnet ist. Die EP 3 017 911 A1 beschäftigt sich mit der mechanisch-konstruktiven Anordnung des aktiven Schwingungsdämpfers. Über die Art und Weise, über welche der aktive Schwingungsdämpfer angesteuert wird, ist der EP 3 017 911 A1 nichts zu entnehmen.
(Kommentar: Hier lassen wir den Stößel, denn wir beschreiben lediglich den Stand der Technik, und dort ist der Schwingungsdämpfer am Stößel).

Auch von der Anmelderin wird ein derartiger Schwingungsdämpfer vertrieben, beispielsweise unter der Bezeichnung AVAU (= Active Vibration Absorber Unit).

Die Aufgabe der vorliegenden Erfindung besteht darin, Möglichkeiten zu schaffen, mittels derer der aktive Schwingungsdämpfer in überlegener Weise betrieben werden kann.

Die Aufgabe wird durch ein Steuerverfahren mit den Merkmalen des Anspruchs 1 gelöst. Vorteilhafte Ausgestaltungen des Steuerverfahrens sind Gegenstand der abhängigen Ansprüche 2 bis 5.

Erfindungsgemäß wird ein Steuerverfahren der eingangs genannten Art dadurch ausgestaltet, dass die Steuereinrichtung unter Steuerung durch das Systemprogramm mindestens einen der Ermittlungsparameter während der spanabhebenden Bearbeitung des Werkstücks durch das Werkzeug variiert.

Dadurch kann die Art und Weise, auf welche der aktive Schwingungsdämpfer die Vibration dämpft, während der spanabhebenden Bearbeitung des Werkstücks durch das Werkzeug jederzeit nach Bedarf eingestellt werden.

Die Voraussetzungen, unter denen die Steuereinrichtung den mindestens einen Ermittlungsparameter variiert, können nach Bedarf bestimmt sein.

So ist es beispielsweise möglich, dass die Steuereinrichtung den mindestens einen Ermittlungsparameter aufgrund einer direkten Vorgabe durch eine Bedienperson variiert. In diesem Fall ist eine direkte Vorgabe durch die Bedienperson möglich. Direkte Vorgaben durch die Bedienperson sind beim Betrieb von Werkzeugmaschinen allgemein unter dem Begriff "Override" bekannt. Ein derartiger Override wird im Regelfall zwar nur zum Einstellen einer Vorschubgeschwindigkeit oder einer Spindeldrehzahl angewendet. Es ist jedoch ohne weiteres möglich, einen Override auch für den mindestens einen Ermittlungsparameter vorzusehen.

Im Betrieb der Werkzeugmaschine arbeitet die Steuereinrichtung in aller Regel ein Nutzprogramm ab, das eine Sequenz von nacheinander auszuführenden Befehlen umfasst. Alternativ oder zusätzlich zu einer Vorgabe durch die Bedienperson ist es möglich, dass die Steuereinrichtung den mindestens einen Ermittlungsparameter aufgrund eines in dem Nutzprogramm enthaltenen Befehls variiert.

Im Rahmen der letztgenannten Vorgehensweise wird der Ermittlungsparameter direkt durch einen Befehl des Nutzprogramms bestimmt. Es ist alternativ aber auch eine indirekte oder implizite Abhängigkeit möglich. Insbesondere ist es möglich, dass die Steuereinrichtung den mindestens einen Ermittlungsparameter in Abhängigkeit von einem Lagesollwert variiert. Dies ist deswegen eine indirekte Abhängigkeit vom Nutzprogramm, weil die Abfolge der Lagesollwerte der Maschinenelemente in der Praxis durch das Nutzprogramm bestimmt ist.

Die Lageistwerte der Maschinenelemente folgen in aller Regel mit einer nur ganz geringen Abweichung den Lagesollwerten. Es ist daher in aller Regel äquivalent, anstelle des Lagesollwerts des mindestens einen Maschinenelements den entsprechenden Lageistwert zu verwerten.

Weiterhin ist es auch möglich, dass die Steuereinrichtung den mindestens einen Ermittlungsparameter in Abhängigkeit von lageunabhängigen Zustandsgrößen der spanabhebenden Bearbeitung des Werkstücks durch das Werkzeug variiert. Als lageunabhängige Zustandsgrößen der spanabhebenden Bearbeitung kommen beispielsweise eine Drehzahl der mindestens einen Spindel, ein Moment bildender Strom der Spindel, Zustandsinformationen der Steuerung wie beispielsweise deren Betriebsmodus (Automatikbetrieb, manueller Betrieb usw.) und/oder der Steuerung bekannte Eigenschaften des Werkzeugs wie beispielsweise dessen Abmessungen oder die Anzahl von dessen Schneidzähnen oder dessen Verschleißzustand in Frage.

Die Aufgabe wird weiterhin durch ein Systemprogramm mit den Merkmalen des Anspruchs 6 gelöst. Erfindungsgemäß wird ein Systemprogramm der eingangs genannten Art derart ausgestaltet, dass die Abarbeitung des Maschinencodes durch die Steuereinrichtung bewirkt, dass die Steuereinrichtung die Werkzeugmaschine gemäß einem erfindungsgemäßen Steuerverfahren steuert.

Die Aufgabe wird weiterhin durch eine Steuereinrichtung einer Werkzeugmaschine mit den Merkmalen des Anspruchs 7 gelöst. Erfindungsgemäß ist eine Steuereinrichtung der eingangs genannten Art mit einem erfindungsgemäßen Systemprogramm programmiert, so dass die Steuereinrichtung im Betrieb ein erfindungsgemäßes ausführt.

Die Aufgabe wird weiterhin durch eine Werkzeugmaschine mit den Merkmalen des Anspruchs 8 gelöst. Erfindungsgemäß ist die Steuereinrichtung der Werkzeugmaschine als erfindungsgemäße Steuereinrichtung ausgebildet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Werkzeugmaschine und deren Steuereinrichtung,
- FIG 2: einen Bearbeitungskopf, ein Werkzeug und ein Werkstück,
- FIG 3: ein Blockschaltbild,
- FIG 4: einen Ausschnitt eines Nutzprogramms und
- FIG 5 bis 10: Ablaufdiagramme.

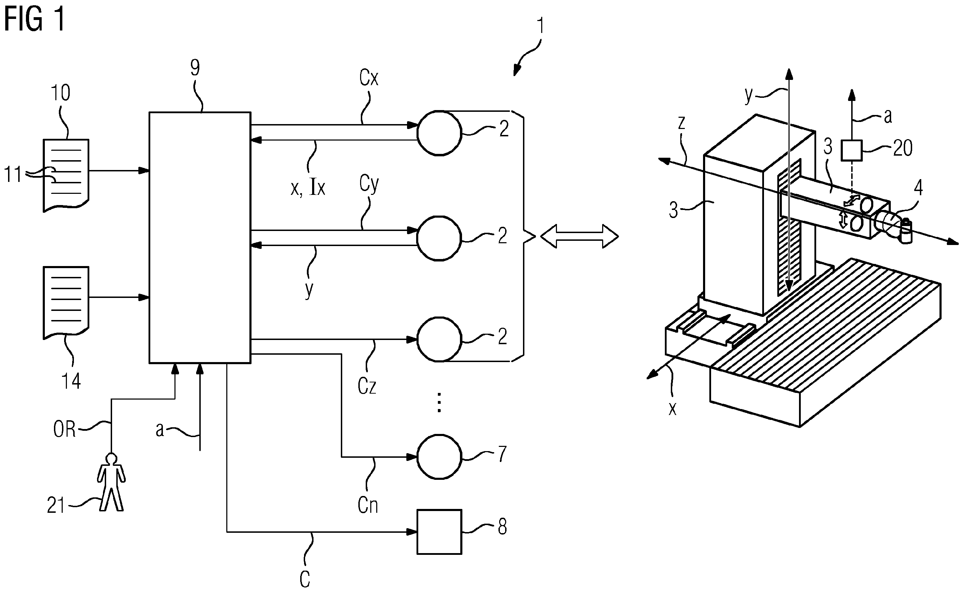

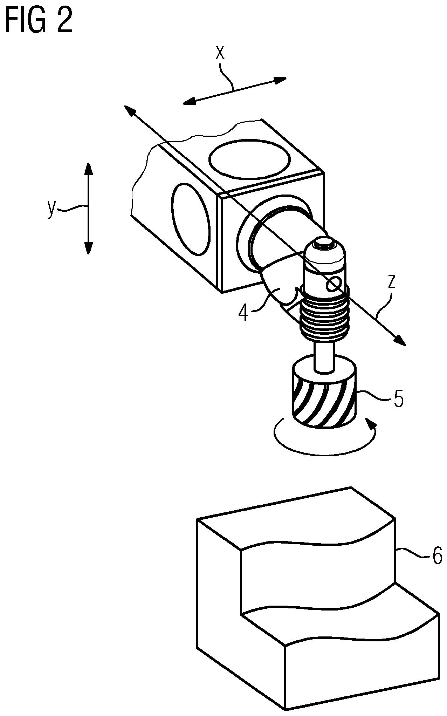

Gemäß FIG 1 weist eine Werkzeugmaschine mehrere Achsen 1 auf. Die Achsen 1 weisen jeweils einen Antrieb 2 und ein von dem jeweiligen Antrieb 2 verfahrbares Maschinenelement 3 auf. Beispielsweise ist es entsprechend der Darstellung in FIG 1 möglich,
- dass eines der Maschinenelemente 3 eine ortsfester Grundkörper ist, der eine Führung aufweist,
- dass eines der Maschinenelemente 3 eine Säule ist, die mittels einer der Achsen 1 nach Art eines Schlittens in der Führung des ortsfesten Grundkörpers in einer mit x bezeichneten Richtung verfahrbar ist,
- dass ein weiteres der Maschinenelemente 3 ein nicht näher dargestelltes Führungselement ist, das mittels einer weiteren der Achsen 1 relativ zu der Säule in einer mit y bezeichneten Richtung verfahrbar ist, und
- dass ein weiteres der Maschinenelemente 3 ein Stößel ist, der mittels einer weiteren der Achsen 1 relativ zu dem nicht näher dargestellten Führungselement in einer mit z bezeichneten Richtung verfahrbar ist, wobei an dem Stößel ein Bearbeitungskopf 4 angeordnet ist, der - siehe FIG 2 - eine Spindel 7 mit einem Werkzeug 5 trägt.
(Kommentar: 2 bezeichnet den Antrieb, 1 die Kombination von Antrieb und Maschinenelement, daher ist meiner Meinung nach die geschwungene 1 auf die 2 in Ordnung.)

Es sind aber auch andere Ausgestaltungen möglich. Weiterhin können - alternativ oder zusätzlich zur Verfahrbarkeit in den Richtungen x, y und z - auch rotatorische Freiheitsgrade gegeben sein. In jedem Fall aber weist die Werkzeugmaschine mehrere Achsen 1 auf. Weiterhin werden die Maschinenelemente 3 mittels der Achsen 1 lagegeregelt relativ zueinander verfahren. Weiterhin wird durch das Verfahren der Maschinenelemente 3 - unabhängig von der konkreten Ausgestaltung der Werkzeugmaschine - das Werkzeug 5 relativ zu einem zu bearbeitenden Werkstück 6 positioniert. Die Positionierung kann rein translatorisch sein. Alternativ ist es möglich, dass die Positionierung zusätzlich auch rotatorische Komponenten mit umfasst, also die Orientierung des Werkzeugs 5 relativ zum Werkstück 6.
(Kommentar: das Werkstück ist in Figur 2 zu sehen, auf Figur 2 haben wir unmittelbar vor dem letzten Kommentar bereits verwiesen. Dass bei dieser Sachlage das Werkstück in Figur 1 nicht eingezeichnet ist, ist unschädlich.)

Die Werkzeugmaschine weist weiterhin mindestens eine Spindel 7 auf. Die Spindel 7 kann drehzahlgeregelt betrieben werden. Sie kann alternativ aber auch lagegeregelt betrieben werden. Mittels der Spindel 7 wird entsprechend der Darstellung in FIG 2 das Werkzeug 5 relativ zum Werkstück 6 rotiert. In manchen Ausgestaltungen ist es auch umgekehrt möglich, dass die Spindel 7 das Werkstück 6 relativ zum Werkzeug 5 rotiert. In beiden Fällen aber bewirkt die Rotation, dass das Werkzeug 5 das Werkstück 6 spanabhebend bearbeitet. Die spanabhebende Bearbeitung kann beispielsweise ein Bohren, ein Fräsen oder ein Drehen sein.
(Kommentar: die Spindel ist in Figur 1 überhaupt nicht nummeriert, siehe die Regieanweisung zu Figur 1: nur handschriftliche Bezugszeichen gelten)

Die Werkzeugmaschine weist weiterhin einen aktiven Schwingungsdämpfer 8 auf. Der aktive Schwingungsdämpfer 8 dient dazu, eine Vibration eines der Maschinenelemente 3 zu dämpfen. Der aktive Schwingungsdämpfer 8 kann beispielsweise an dem entsprechend der Darstellung in FIG 1 als Stößel ausgebildeten Maschinenelement 3 angeordnet sein. Er kann aber auch an einer anderen Stelle angeordnet sein, sei es an einem der als solche verfahrbaren Maschinenelemente, sei es an einem ortsfesten Maschinenelement. In jedem Fall aber wirkt der aktive Schwingungsdämpfer 8 auf das Maschinenelement 3, dessen Vibration gedämpft werden soll.
(Kommentar: der Schwingungsdämpfer ist nur der Block 8 links unten; die mit 7 im aus dem EP-Patent übernommenen Teil bezeichneten Elemente werden von mir nicht weiter erläutert.)

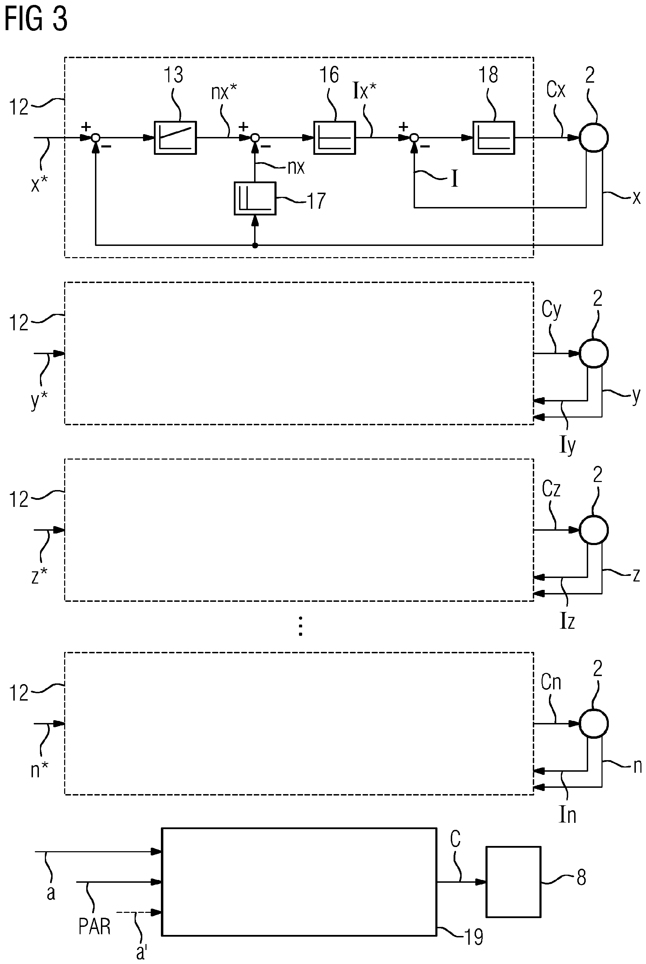

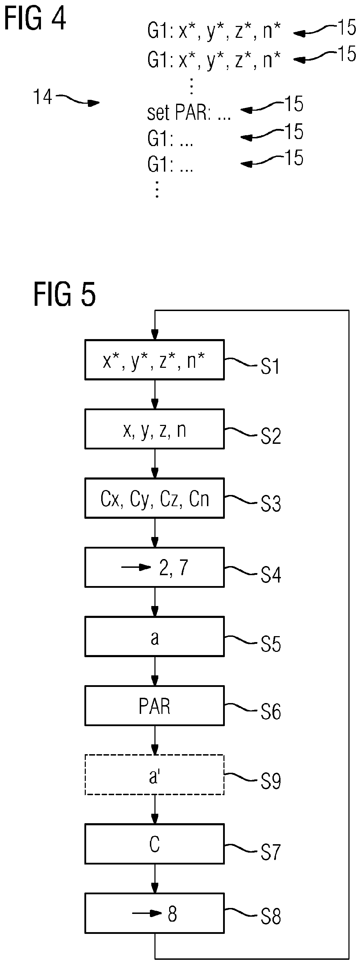

Die Werkzeugmaschine weist weiterhin eine Steuereinrichtung 9 auf. Die Steuereinrichtung ist mit einem Systemprogramm 10 programmiert. Das Systemprogramm 10 umfasst Maschinencode 11, der von der Steuereinrichtung 9 abarbeitbar ist. Die Abarbeitung des Maschinencodes 11 durch die Steuereinrichtung 9 und damit die Steuerung der Steuereinrichtung 9 durch das Systemprogramm 10 bewirkt, dass die Steuereinrichtung 9 die Werkzeugmaschine gemäß einem Steuerverfahren steuert, das nachstehend näher erläutert wird. Hierbei wird die Wirkungsweise der Steuereinrichtung 9 zunächst in Verbindung mit FIG 3 anhand eines Blockschaltbildes näher erläutert, danach in Verbindung mit FIG 5 anhand eines Ablaufdiagramms.

Gemäß FIG 3 implementiert die Steuereinrichtung 9 aufgrund der Abarbeitung des Maschinencodes 11 für die Achsen 1 jeweils einen Regelungsblock 12. Die Regelungsblöcke 12 sind in der Regel gleich aufgebaut. Nachfolgend wird daher in Verbindung mit FIG 3 nur einer der Regelungsblöcke 12, nämlich der Regelungsblock 12 für die Achse 1, welche ein Verfahren des entsprechenden Maschinenelements 3 in der x-Richtung bewirkt, näher erläutert. Für die anderen Regelungsblöcke 12 gelten analoge Ausführungen.

Gemäß FIG 3 weist der Regelungsblock 12 einen Lageregler 13 auf. Dem Lageregler 13 werden ein Lagesollwert x* und ein Lageistwert x (also die jeweils aktuelle Positionierung in der x-Richtung) zugeführt. Der Lageistwert x wird beispielsweise von der Achse 1 bzw. deren Antrieb 2 zur Verfügung gestellt. Der Lagesollwert x* kann von der Steuereinrichtung 9 beispielsweise anhand eines Nutzprogramms 14 ermittelt werden. Das Nutzprogramm 14 kann insbesondere entsprechend der Darstellung in FIG 4 nach Art eines sogenannten Teileprogramms ausgebildet sein. In diesem Fall umfasst das Nutzprogramm 14 eine Sequenz von nacheinander auszuführenden Befehlen 15. Viele dieser Befehle 15 sind Wegbefehle, die geradlinige oder kreisförmige Fahrbewegungen definieren, beispielsweise sogenannte G1-Befehle. Sie weisen entsprechend der Darstellung in FIG 4 einen jeweiligen Lagesollwert x*, y* und z* für die Achsen 1 aufweisen. Zusätzlich kann das Nutzprogramm 14 auch einen Vorschubwert für die Verfahrbewegung des Werkzeugs 5 relativ zum Werkstück 6 und/oder einen Drehzahlsollwert n* für die Spindel 7 mit umfassen. Sofern das Nutzprogramm 14 vorhanden ist, erfolgt auch die Abarbeitung des Nutzprogramms 14 unter Steuerung durch das Systemprogramm 10.

Der Lageregler 13 ermittelt anhand des entsprechenden Lagesollwerts x* und des zugehörigen Lageistwerts x - in der Regel anhand von deren Differenz - einen Drehzahlsollwert nx*. Der Drehzahlsollwert nx* bestimmt die Drehzahl nx, mit welcher der Antrieb 2 das entsprechende Maschinenelement 3 in der x-Richtung verfahren soll. Der Drehzahlsollwert nx* und der korrespondierende Drehzahlistwert nx werden einem Drehzahlregler 16 zugeführt. Der Drehzahlistwert nx kann beispielsweise aus dem Lageistwert x durch Differenzieren in einem Differenzierer 17 ermittelt werden.

Der Drehzahlregler 16 ermittelt anhand des entsprechenden Drehzahlsollwerts nx* und des zugehörigen Drehzahlistwerts nx - in der Regel anhand von deren Differenz - einen Stromsollwert Ix*. Der Stromsollwert Ix* bestimmt den Strom Ix, mit dem der der Antrieb 2 beaufschlagt werden soll. Der Stromsollwert Ix* und der korrespondierende Stromistwert Ix werden einem Stromregler 18 zugeführt. Der Stromistwert Ix kann von einer control unit zur Verfügung gestellt werden, die einen Umrichter des entsprechenden Antriebs 2 ansteuert, der seinerseits eine elektrische Maschine des entsprechenden Antriebs 2 mit Strom versorgt. Der Stromregler 18 ermittelt die Steuerbefehle Cx, mit denen die control unit des Umrichters den Umrichter ansteuern soll. Die control unit des Umrichters und der Umrichter selbst sind in FIG 3 nicht mit dargestellt. Die obenstehend skizzierte Vorgehensweise kann noch durch Aufschalten von Vorsteuerwerten ergänzt sein. Dies ist im Rahmen der vorliegenden Erfindung von untergeordneter Bedeutung. Weiterhin wird, wie bereits erwähnt, für die anderen Achsen 1 eine analoge Vorgehensweise ergriffen. Die zugehörigen Soll- und Istgrößen sind in FIG 3 nur teilweise eingezeichnet.

Für die Spindel 7 bzw. deren nicht näher dargestellten Antrieb wird dieselbe oder eine ähnliche Vorgehensweise ergriffen. Dieselbe Vorgehensweise wird ergriffen, wenn die Spindel 7 lagegeregelt betrieben wird. Eine ähnliche Vorgehensweise wird ergriffen, wenn die Spindel 7 drehzahlgeregelt betrieben wird. Der Unterschied besteht in diesem Fall darin, dass für diesen Regelungsblock 12 der Lageregler entfallen kann.

Aufgrund der obenstehend erläuterten Vorgehensweise steuert die Steuereinrichtung 9 somit die Achsen 1 an, so dass die Maschinenelemente 3 der Werkzeugmaschine lagegeregelt verfahren werden. Durch das Verfahren wird das Werkzeug 5 relativ zum Werkstück 6 positioniert. Weiterhin wird die Spindel 7 angetrieben, so dass das Werkzeug 5 rotiert und hierbei das Werkstück 6 spanabhebend bearbeitet.

Die Steuereinrichtung 9 implementiert weiterhin einen Ermittlungsblock 19. Dem Ermittlungsblock 19 wird im Rahmen des Betriebs der Werkzeugmaschine und damit insbesondere auch während der spanabhebenden Bearbeitung des Werkstücks 6 durch das Werkzeug 5 mindestens eine Messgröße a zugeführt. Die Messgröße a wird mittels eines geeigneten Sensors 20 (siehe FIG 1) erfasst. Es kann sich bei der Messgröße a beispielsweise um die Beschleunigung desjenigen der Maschinenelemente 3 handeln, dessen Vibration gedämpft werden soll. Unabhängig von der Art der Messgröße a ist die Messgröße a jedoch für eine Vibration dieses Maschinenelements 3 charakteristisch.

Um die Vibration dieses Maschinenelements 3 zu dämpfen, ermittelt die Steuereinrichtung 9 in dem Ermittlungsblock 19 anhand der Messgröße a eine Steuergröße C für den aktiven Schwingungsdämpfer 8. Die Ermittlung in dem Ermittlungsblock 19 erfolgt unter Verwendung von Ermittlungsparametern PAR. Die Ermittlung der Steuergröße C und die Ansteuerung Entsprechend der ermittelten Steuergröße C steuert die Steuereinrichtung 9 den aktiven Schwingungsdämpfer 8 an.

Die Ermittlungsparameter PAR sind keine Variable. Es handelt sich vielmehr um Parameter. Variable sind Werte, die sich im laufenden Betrieb der Werkzeugmaschine kontinuierlich ändern und der jeweiligen Einrichtung, welche die Variable verwertet, jederzeit aktuell zugeführt werden müssen. Typische Beispiele von Variablen sind Sollwerte x*, y*, z*, n* und Istwerte x, y, z, n von Reglern und von den Reglern ermittelte Steuerbefehle Cx, Cy, Cz, Cn. Parameter hingegen sind Werte, die zwar in die Ermittlung von Ausgangsgrößen eingehen, aber nur einmalig vorgegeben werden und danach nicht oder nur selten geändert werden. Typische Beispiele sind eine Proportionalverstärkung und eine Nachstellzeit eines PI-Reglers oder Parameter einer Filtercharakteristik.

Die Ermittlungsparameter PAR können nach Bedarf bestimmt sein. Beispielsweise kann der Ermittlungsblock 19 als PID-Regler ausgebildet sein. In diesem Fall können die Ermittlungsparameter PAR beispielsweise für den Proportionalanteil eine Proportionalverstärkung, für den Integralanteil eine Nachstellzeit und für den Differenzialanteil eine die Ermittlung des Differenzialanteils beschreibende Größe umfassen. Auch ist es möglich, dass der Ermittlungsblock 19 ein Modell der Werkzeugmaschine umfasst, das im Rahmen der Ermittlung der Steuergröße C verwendet wird, und dass durch die Ermittlungsparameter PAR Modellparameter des Modells beeinflusst werden. Auch kann beispielsweise eine Filtercharakteristik eines Frequenzfilters eingestellt werden. Auch andere Größen können, je nach Ausgestaltung des Ermittlungsblocks 19, durch die Ermittlungsparameter PAR eingestellt werden. Von Bedeutung ist, dass die Steuereinrichtung 9 die Ermittlungsparameter PAR im Rahmen der Ermittlung der Steuergröße C verwertet und dass die Steuereinrichtung 9 in der Lage ist, mindestens einen der Ermittlungsparameter PAR während der spanabhebenden Bearbeitung des Werkstücks 6 durch das Werkzeug 5 zu variieren.

Die erfindungsgemäße Vorgehensweise und insbesondere das Variieren mindestens eines der Ermittlungsparameter PAR auch während der spanabhebenden Bearbeitung des Werkstücks 6 durch das Werkzeug 5 werden aus der nachfolgenden Beschreibung der erfindungsgemäßen Vorgehensweise in Verbindung mit FIG 5 noch deutlicher ersichtlich.

Wie aus FIG 5 ohne weiteres ersichtlich ist, werden Schritte S1 bis S9 der Vorgehensweise von FIG 5 zyklisch wiederholt ausgeführt. Die nachstehenden Ausführungen beziehen sich auf den jeweiligen Zyklus. Dies wird nachstehend nicht jedes Mal neu erwähnt.

Im Schritt S1 werden der Steuereinrichtung 9 die Lagesollwerte x*, y*, z* der Achsen 1 und gegebenenfalls auch der Drehzahlsollwert n* der Spindel 7 bekannt. Im Schritt S2 werden der Steuereinrichtung 9 die Lageistwerte x, y, z der Achsen 1 und gegebenenfalls auch der Drehzahlistwert n der Spindel 7 bekannt. Im Schritt S3 ermittelt die Steuereinrichtung 9 die Steuerbefehle Cx, Cy, Cz für die Achsen 1 und gegebenenfalls auch den Steuerbefehl Cn für die Spindel 7. Im Schritt S4 gibt die Steuereinrichtung 9 die Steuerbefehle Cx, Cy, Cz für die Achsen 1 und gegebenenfalls auch den Steuerbefehl Cn für die Spindel 7 an die Achsen 1 und gegebenenfalls auch die Spindel 7 aus.

Im Schritt S5 nimmt die Steuereinrichtung 9 die Messgröße a entgegen. Im Schritt S6 variiert die Steuereinrichtung 9, soweit erforderlich, mindestens einen der Ermittlungsparameter PAR. Im Schritt S7 ermittelt die Steuereinrichtung 9 anhand der Messgröße a und unter Verwertung der Ermittlungsparameter PAR die Steuergröße C. Im Schritt S8 steuert die Steuereinrichtung 9 den aktiven Schwingungsdämpfer 8 entsprechend der ermittelten Steuergröße C an.

Es ist möglich, dass dem Schritt S7 entsprechend der Darstellung in FIG 5 der Schritt S9 vorgeordnet ist. In diesem Fall ermittelt die Steuereinrichtung 9 im Schritt S9 einen Erwartungswert a' für die Messgröße a, beispielsweise einen Erwartungswert für die Beschleunigung. In diesem Fall kann gegebenenfalls im Schritt S7 zusätzlich zu der Messgröße a auch der Erwartungswert a' mit berücksichtigt werden. Insbesondere kann gegebenenfalls die Steuergröße C anhand der Abweichung der Messgröße a vom Erwartungswert a' ermittelt werden. Der Schritt S9 ist, weil er nur optional vorhanden ist, in FIG 5 gestrichelt eingezeichnet.

Die Grundlage, aufgrund derer die Steuereinrichtung 9 den mindestens einen Ermittlungsparameter PAR variiert, kann nach Bedarf bestimmt sein.

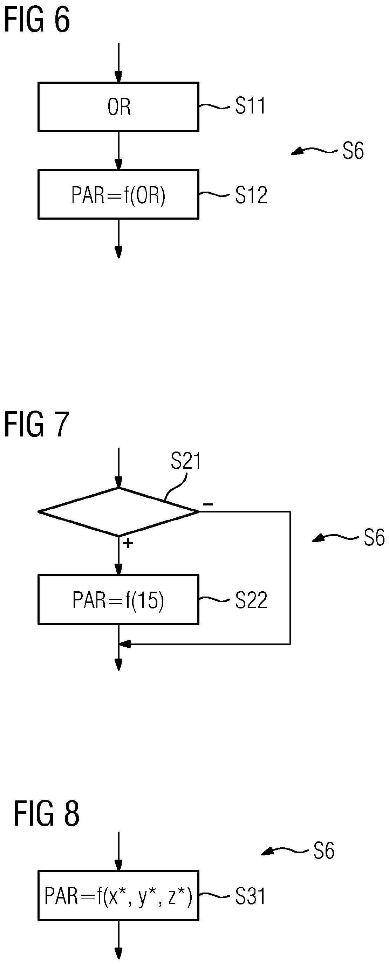

So ist es beispielsweise entsprechend der Darstellung in FIG 6 möglich, den Schritt S6 durch Schritte S11 und S12 zu implementieren. Im Schritt S11 nimmt die Steuereinrichtung 9 von einer Bedienperson 21 (siehe FIG 1) eine direkte Vorgabe OR entgegen, beispielsweise einen Override. Im Schritt S12 variiert die Steuereinrichtung 9 sodann den mindestens einen Ermittlungsparameter PAR aufgrund der direkten Vorgabe OR.

Ebenso ist es entsprechend der Darstellung in FIG 4 möglich, dass das Nutzprogramm 14 als Befehle 15 nicht nur die Positionierungsbefehle umfasst, sondern auch weitere Befehle, durch welche mindestens einer der Ermittlungsparameter PAR direkt beeinflusst wird. In diesem Fall ist es entsprechend der Darstellung in FIG 7 möglich, den Schritt S6 durch Schritte S21 und S22 zu implementieren. Im Schritt S21 prüft die Steuereinrichtung 9, ob der von ihr gerade abgearbeitete Befehl 15 des Nutzprogramms 14 ein derartiger weiterer Befehl ist. Wenn dies der Fall ist, variiert die Steuereinrichtung 9 im Schritt S22 den mindestens einen Ermittlungsparameter PAR aufgrund des entsprechenden weiteren Befehls. Anderenfalls überspringt die Steuereinrichtung 9 den Schritt S22.

Ebenso ist es entsprechend der Darstellung in FIG 8 möglich, dass die Steuereinrichtung 9 den Schritt S6 durch einen Schritt S31 implementiert. Im Schritt S31 variiert die Steuereinrichtung 9 den mindestens einen Ermittlungsparameter PAR in Abhängigkeit von einem Lagesollwert x*, y*, z* mindestens eines der Maschinenelemente 3. Hierbei kann es sich zwar um den Lagesollwert x*, y*, z* desjenigen Maschinenelements 3 handeln, dessen Vibration durch den aktiven Schwingungsdämpfer 8 gedämpft werden soll. Es kann sich aber auch um den Lagesollwert x*, y*, z* eines anderen Maschinenelements 3 handeln. Auch kann es sich um die Lagesollwerte x*, y*, z* mehrerer Maschinenelemente 3 handeln.

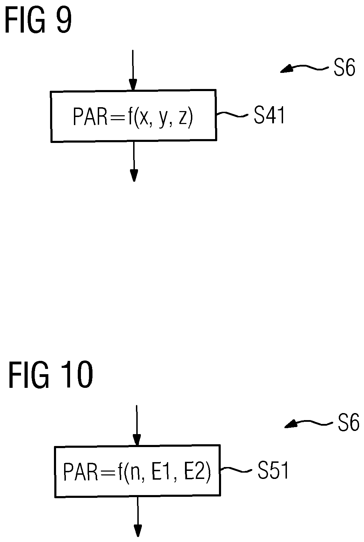

Alternativ zur Verwertung der Lagesollwerte gemäß FIG 8 ist es entsprechend der Darstellung in FIG 9 möglich, den Schritt S31 durch einen Schritt S41 zu ersetzen. Der Unterschied zu FIG 8 besteht darin, dass bei FIG 9 anstelle der Lagesollwerte x*, y*, z* die korrespondierenden Lageistwerte x, y, z verwertet werden.

Ebenso ist es entsprechend der Darstellung in FIG 10 möglich, dass die Steuereinrichtung 9 den Schritt S6 durch einen Schritt S51 implementiert. Im Schritt S51 variiert die Steuereinrichtung 9 den mindestens einen Ermittlungsparameter PAR in Abhängigkeit von lageunabhängigen Zustandsgrößen der spanabhebenden Bearbeitung des Werkstücks 6 durch das Werkzeug 5, beispielsweise in Abhängigkeit von der Drehzahl n der Spindel 7, von Eigenschaften E1 des Werkzeugs 5 (beispielsweise dessen Abmessungen und/oder sonstigen konstruktiven Eigenschaften) und/oder von Eigenschaften E2 des Werkstücks 6 (beispielsweise dessen Abmessungen und/oder dessen Material). Auch andere Größen können verwertet werden, beispielsweise ein momentbildender Strom der Spindel 7 oder ein Verschleißzustand des Werkzeugs 5. In Abhängigkeit von derartigen Größen kann beispielsweise eine Filtercharakteristik, mit weleher die Messgröße a oder die Differenz der Messgröße a und des Erwartungswert a' vor der weitergehenden Verarbeitung gefiltert werden, geeignet eingestellt werden.

Die obenstehend isoliert erläuterten Ausgestaltungen können weiterhin nach Bedarf auch miteinander kombiniert werden. So ist es beispielsweise möglich, einerseits den mindestens einen Ermittlungsparameter PAR in Abhängigkeit von Befehlen 15 des Nutzprogramms 14 zu variieren, den mindestens einen Ermittlungsparameter PAR aber zusätzlich in Abhängigkeit von der aktiven Vorgabe OR zu variieren.

Zusammengefasst betrifft die vorliegende Erfindung somit folgenden Sachverhalt:
Eine Steuereinrichtung 9 einer Werkzeugmaschine wird durch ein Systemprogramm 10 gesteuert. Dadurch steuert die Steuereinrichtung 9 Achsen 1 an, mittels derer Maschinenelemente 3 der Werkzeugmaschine lagegeregelt relativ zueinander verfahren werden, so dass ein Werkzeug 5 der Werkzeugmaschine relativ zu einem zu bearbeitenden Werkstück 6 positioniert wird. Auch treibt sie mindestens eine Spindel 7 der Werkzeugmaschine an, so dass das Werkzeug 5 das Werkstück 6 spanabhebend bearbeitet. Während der spanabhebenden Bearbeitung des Werkstücks 6 durch das Werkzeug 5 nimmt die Steuereinrichtung 9 mindestens eine Messgröße a entgegen, die für eine Vibration eines der Maschinenelemente 3 charakteristisch ist. Anhand der mindestens einen Messgröße a ermittelt sie mit oder ohne Berücksichtigung eines Erwartungswertes a' für die mindestens eine Messgröße a zur Dämpfung der Vibration dieses Maschinenelements 3 unter Verwendung von Ermittlungsparametern PAR eine Steuergröße C für einen auf dieses Maschinenelement 3 wirkenden aktiven Schwingungsdämpfer 8 und steuert den aktiven Schwingungsdämpfer 8 entsprechend der ermittelten Steuergröße C an. Weiterhin variiert die Steuereinrichtung 9 während der spanabhebenden Bearbeitung des Werkstücks 6 durch das Werkzeug 5 mindestens einen der Ermittlungsparameter PAR.

Die vorliegende Erfindung weist viele Vorteile auf. Insbesondere ist jederzeit ein für den die jeweilige Bearbeitungssituation optimierter Betrieb des aktiven Schwingungsdämpfers 8 möglich.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Steuerverfahren für eine Werkzeugmaschine, wobei eine Steuereinrichtung (9) der Werkzeugmaschine unter Steuerung durch ein Systemprogramm (10)
- Achsen (1) ansteuert, mittels derer Maschinenelemente (3) der Werkzeugmaschine lagegeregelt relativ zueinander verfahren werden, so dass ein Werkzeug (5) der Werkzeugmaschine relativ zu einem zu bearbeitenden Werkstück (6) positioniert wird,
- mindestens eine Spindel (7) der Werkzeugmaschine antreibt, so dass das Werkzeug (5) das Werkstück (6) spanabhebend bearbeitet,
- während der spanabhebenden Bearbeitung des Werkstücks (6) durch das Werkzeug (5) mindestens eine Messgröße (a) entgegennimmt, die für eine Vibration eines der Maschinenelemente (3) charakteristisch ist,
- anhand der mindestens einen Messgröße (a) mit oder ohne Berücksichtigung eines Erwartungswertes (a') für die mindestens eine Messgröße (a) zur Dämpfung der Vibration dieses Maschinenelements (3) unter Verwendung von Ermittlungsparametern (PAR) eine Steuergröße (C) für einen auf dieses Maschinenelement (3) wirkenden aktiven Schwingungsdämpfer (8) ermittelt,
- den aktiven Schwingungsdämpfer (8) entsprechend der ermittelten Steuergröße (C) ansteuert und
- mindestens einen der Ermittlungsparameter (PAR) während der spanabhebenden Bearbeitung des Werkstücks (6) durch das Werkzeug (5) variiert.

2. Steuerverfahren nach Anspruch 1,
**dadurch gekennzeichnet,**
**dass** die Steuereinrichtung (9) den mindestens einen Ermittlungsparameter (PAR) aufgrund einer direkten Vorgabe (OR) durch eine Bedienperson (21) variiert.

3. Steuerverfahren nach Anspruch 1 oder 2,
**dadurch gekennzeichnet,**
**dass** die Steuereinrichtung (9) ein Nutzprogramm (14) abarbeitet, das eine Sequenz von nacheinander auszuführenden Befehlen (15) umfasst, und dass die Steuereinrichtung (9) den mindestens einen Ermittlungsparameter (PAR) aufgrund eines in dem Nutzprogramm (14) enthaltenen Befehls (15) variiert.

4. Steuerverfahren nach Anspruch 1, 2 oder 3,
**dadurch gekennzeichnet,**
**dass** die Steuereinrichtung (9) den mindestens einen Ermittlungsparameter (PAR) in Abhängigkeit von einem Lagesollwert (x*, y*, z*) oder einem Lageistwert (x, y, z) mindestens eines der Maschinenelemente (3) variiert.

5. Steuerverfahren nach einem der obigen Ansprüche,
**dadurch gekennzeichnet,**
**dass** die Steuereinrichtung (9) den mindestens einen Ermittlungsparameter (PAR) in Abhängigkeit von lageunabhängigen Zustandsgrößen (n, E1, E2) der der spanabhebenden Bearbeitung des Werkstücks (6) durch das Werkzeug (5) variiert.

6. Systemprogramm für eine Steuereinrichtung (9) einer Werkzeugmaschine, wobei das Systemprogramm Maschinencode (11) umfasst, der von der Steuereinrichtung (9) abarbeitbar ist, wobei die Abarbeitung des Maschinencodes (11) durch die Steuereinrichtung (9) bewirkt, dass die Steuereinrichtung (9) die Werkzeugmaschine gemäß einem Steuerverfahren nach einem der obigen Ansprüche steuert.

7. Steuereinrichtung einer Werkzeugmaschine, wobei die Steuereinrichtung mit einem Systemprogramm (10) gemäß Anspruch 6 programmiert ist, so dass die Steuereinrichtung im Betrieb ein Steuerverfahren nach einem der Ansprüche 1 bis 5 ausführt.

8. Werkzeugmaschine,
- wobei die Werkzeugmaschine mehrere Achsen (1) aufweist, mittels derer Maschinenelemente (3) der Werkzeugmaschine lagegeregelt verfahrbar sind, so dass durch das Verfahren der Maschinenelemente (3) ein Werkzeug (5) der Werkzeugmaschine relativ zu einem zu bearbeitenden Werkstück (6) positioniert wird,
- wobei die Werkzeugmaschine mindestens eine Spindel (7) aufweist, mittels derer das Werkzeug (5) relativ zum Werkstück (6) oder umgekehrt das Werkstück (6) relativ zum Werkzeug (5) rotierbar ist, so dass das Werkzeug (5) das Werkstück (6) spanabhebend bearbeitet,
- wobei die Werkzeugmaschine einen aktiven Schwingungsdämpfer (8) aufweist, mittels dessen eine Vibration eines der Maschinenelemente (3) dämpfbar ist,
- wobei die Werkzeugmaschine eine Steuereinrichtung (9) nach Anspruch 7 aufweist.
